# EUROPEAN PATENT SPECIFICATION

(11) **EP 1 885 538 B1**
(45) Date of publication and mention of the grant of the patent: **31.08.2016**
(21) Application number: 06759062.0
(22) Date of filing: 05.05.2006
(51) Int. Cl.: B29C 43/28

(54) **LOW-DENSITY, CLASS A SHEET MOLDING COMPOUNDS CONTAINING DIVINYBENZENE**
DIVINYLBENZEN ENTHALTENDE SMCS (SHEET MOLDING COMPOUNDS) DER KLASSE NIEDRIGER DICHTE
COMPOSES DE FAIBLE DENSITE, DE CLASSE A, POUR MOULAGE EN FEUILLE, CONTENANT DU DIVINYBENZENE

(30) Priority: 09.05.2005 US 124294
(43) Date of publication of application: 13.02.2008
(73) Proprietor: Ashland Licensing and Intellectual Property LLC, Dublin, OH 43017 (US)
(72) Inventor: SUMNER, Michael J., Dublin, Ohio 43017 (US); FISHER, Dennis, H., Westerville, Ohio 43081 (US)
(74) Representative: Bülle, Jan
(86) International application number: PCT/US2006/017203
(87) International publication number: WO 2006/121768

(56) References cited:
- WO-A1-03/089217
- WO-A2-03/031135
- US-A- 5 236 976
- US-A- 5 504 151
- US-A1- 2003 199 625
- US-B2- 6 521 162
- US-B2- 6 759 466
- K.E. ATKINS ET AL.: "The use of divinylbenzene monomer for improved fiber-reinforced composites", MARKETING/TECHNICAL/REGULATORY SESSIONS OF THE COMPOSITES INSTITUTE'S INTERNATIONAL COMPOSITES EXPO '97, 27 January 1997 (1997-01-27), - 29 January 1997 (1997-01-29), XP002733569,
- Anonymous: "The use of divinylbenzene monomer for improved fiber-reinforced composites", DOW , 2003, pages 1-8, XP002733570, Retrieved from the Internet: URL:http://msdssearch.dow.com/PublishedLit eratureDOWCOM/dh_003d/0901b8038003dd4c.pdf ?filepath=specialtymonomers/pdfs/noreg/503 -00007.pdf&fromPage=GetDoc [retrieved on 2014-12-09]

## Description

The present disclosure relates generally to resin formulations for sheet molding compounds. Particularly, but not by way of limitation, the invention relates to low-density thermosetting sheet molding compounds (SMC) comprising an organic-modified, inorganic clay, a thermosetting resin, a low profile agent, a reinforcing agent, a low-density filler, and substantially the absence of calcium carbonate. The present disclosure relates particularly to the use of alternative reactive monomers present as aromatic, multiethylenically-unsaturated compounds that aid thermosetting SMC in yielding exterior and structural thermoset articles, e.g. auto parts, panels, etc that have Class A Surface Quality.

The information provided bellow is not admitted to be prior art to the present invention, but is provided solely to assist the understanding of the reader.

The transportation industry makes extensive use of standard composite parts formed from sheet molding compound (SMC). Sheet molding compound comprising unsaturated polyester fiberglass reinforced plastics (FRP) are extensively used in exterior body panel applications due to their corrosion resistance, strength, and resistance to damage. The automotive industry has very stringent requirements for the surface appearance of these body panels. This desirable smooth surface is generally referred to as a "class A" surface. Surface quality (SQ), as measured by the Laser Optical Reflected Image Analyzer (LORIA), is determined by three measurements - Ashland Index (AI), Distinctness of Image (DOI), and Orange Peel (OP). SMC with Class A SQ is typically defined as having an AI <80, a DOI ≥ 70 (scale 0-100), and an OP ≥ 7.0 (scale 0-10).

A molded composite article is a shaped, solid material that results when two or more different materials having their own unique characteristics are combined to create a new material, and the combined properties, for the intended use, are superior to those of the separate starting materials. Typically, the molded composite article is formed by curing a shaped sheet molding compound (SMC), which comprises a fibrous material, e.g. glass fibers, embedded into a polymer matrix. While the mechanical properties of a bundle of fibers are low, the strength of the individual fibers is reinforced by the polymer matrix that acts as an adhesive and binds the fibers together. The bound fibers provide rigidity and impart structural strength to the molded composite article, while the polymeric matrix prevents the fibers from separating when the molded composite article is subjected to environmental stress.

The polymeric matrix of the molded composite article is formed from a thermosetting resin, which is mixed with fibers used to make a SMC. Thermosetting polymers "set" irreversibly by a curing reaction, and do not soften or melt when heated because they chemically cross-link when they are cured. Examples of thermosetting resins include phenolic resins, unsaturated polyester resins, polyurethane-forming resins, and epoxy resins.

Although a molded composite article made from SMC based on thermosetting polymers typically have good mechanical properties and surface finish; this is achieved by loading the SMC with high levels of filler. These fillers, however, add weight to the SMC, which is undesirable, particularly when they are used to make automotive or parts of other vehicles that operate on expensive fuels. Therefore, there is an interest in developing SMC that will provide molded composite articles with good mechanical properties that have lower density, in order to improve fuel efficiency.

Additionally, the use of high levels of filler is particularly a problem when highly reactive unsaturated polyesters are used as the thermosetting polymer for making composites. Molded composite articles made from SMC formulations, which employ high reactivity unsaturated polyester resins, shrink substantially during cure. The shrinkage is controlled with low profile additives (LPA's) and large amounts of fillers, e.g. calcium carbonate, and kaolin clay. Although the resulting molded composite articles have good strength and surface appearance, the density of the composite is high, typically 1.9-2.0 g/cm³. Thus, when used in applications, such as automotive body parts, the added weight lowers fuel efficiency.

U.S. Patent 6,287,992 relates to a thermoset polymer composite comprising an epoxy vinyl ester resin or unsaturated polyester matrix having dispersed therein particles derived from a multi-layered inorganic material, which possesses organophilic properties. The dispersion of the multi-layered inorganic material with organophilic properties in the polymer matrix is such that an increase in the average interlayer spacing of the layered inorganic material occurs to a significant extent, resulting in the formation of a nanocomposite. Although the patent discloses polymer composites, it does not disclose molded composite articles and their mechanical properties, e.g. tensile strength (psi), modulus (ksi), elongation (%), and heat distortion temperature (°C), nor does it disclose the manufacture of SMC that contains a reinforcing agent, a LPA, and a filler. The problem with using the SMC of the '992 patent is that molded articles prepared with the SMC experience significant shrinkage and are subject to significant internal stress, resulting in the formation of cracks in molded articles.

U.S. Patent 5,585,439 discloses SMC made with an unsaturated polyester resin, and teaches that the mechanical properties of the SMC can be improved if a low profile additive (LPA) is added to the SMC. However, this patent does not teach or suggest the use of nanocomposites in the SMC. The problem with the SMC disclosed in the '439 patent is that when LPA's are used alone, without large amounts of filler (e.g. calcium carbonate and kaolin clay), the molded articles prepared from them have micro and macro voids, which results in molded articles having very low suength. Thus, large amounts of conventional fillers, in addition to LPA's, are required to obtain both good strength and surface appearance of molded articles.

WO 03/089217 relates to low-density thermosetting sheet molding compounds (SMC) comprising a treated inorganic clay, a curative, a low profile agent, a reinforcing agent, and preferably a low-density filler. The thermosetting SMC are used to prepare exterior and structural thermoset articles, e.g. auto parts, panels, etc.

WO 03/031135 discloses a composite part made from a sheet molding compound as having improved characteristics over traditional sheet molding compound composite parts. The fibrous material is introduced as a veil layer adjacent a paste layer, the veil flows well during the molding process. The improved flow and surface characteristics of a composite part are attributed to the elongation of the veil during molding and to the improved filling capabilities.

K.E. ATKINS ET AL:, MARKETING/TECHNICAL/REGULATORY SESSIONS OF THE COMPOSITES INSTITUTE'S INTERNATIONAL COMPOSITES EXPO '97 JANUARY 27-29, January 1997, and http://msdssearch.dow.com/PublishedLiteratureDOWCOM/ dh_003d/0901b8038003dd4c.pdf?503-00007.pdf&fromPage=GetDoc, 2003, relate to the use of divinylbenzene monomer for improved fiber-reinforced composites.

Unsaturated polyester resins typically shrink 5-8% on a volume basis when they are cured. In an FRP, this results in a very uneven surface because the glass fibers cause peaks and valleys when the resin shrinks around them. Thermoplastic low profile additives (LPA) have been developed in order to help these materials meet the stringent surface smoothness requirements for a class A surface. LPA's are typically thermoplastic polymers, which compensate for curing shrinkage by creating extensive microvoids in the cured resin. Unsaturated polyester resins can now be formulated to meet or exceed the smoothness of metal parts which are also widely used in these applications.

In addition to LPA's, formulations contain large amounts of inorganic fillers such as calcium carbonate (CaCO₃). These fillers contribute in two critical ways towards the surface smoothness of these compositions. First, the fillers dilute the resin mixture. Typically, there may be twice as much filler as resin on a weight basis in a formulation. This reduces the shrinkage of the overall composition simply because there is less material undergoing shrinkage. The second function of the filler is in aiding the microvoiding that LPA's induce.

In recent years, there has been added pressure on the automotive manufacturers to reduce the weight of cars in order to improve gas mileage. While FRP's have an advantage in this respect compared to competitive materials because of lower specific gravity, the fillers mentioned previously cause the part to be heavier than necessary. Most inorganic fillers have fairly high densities. Calcium carbonate, the most commonly used filler, has a density of about 2.71 g/cc, compared to a density of about 1.2 g/cc for cured unsaturated polyester. A common FRP material used in body panel applications will have a density of about 1.9 to 2.0 g/cc. If this could be reduced by 10 to 20% while maintaining the other excellent properties of unsaturated polyester FRP's, a significant weight savings could be realized.

As the density is reduced, however, maintaining Class A SQ becomes difficult. The industry has expressed a need for low-density SMC having Class A Surface Quality. The industry has expressed a need for SMC formulations that maintain mechanical properties and matrix toughness without increasing the paste viscosity above the range required for SMC sheet preparation.

Other objects and advantages will become apparent from the following disclosure.

An aspect of the invention provides a sheet molding paste for formulation comprising a thermosetting resin, an ethylenically unsaturated monomer, an alternative reactive monomer, which is an aromatic. multiethylenically-unsaturated monomer a low profiling additive, and a nanoclay filler composition, wherein the SMC has a density less than about 1.25 g/cm³. According to a further aspect of the invention, a sheet molding compound (SMC) formulation is provided comprising the inventive paste and further comprising a reinforcing roving.

An aspect of the present invention provides a sheet molding compound (SMC) having an alternative reactive monomer present as an aromatic, multiethylenically-unsaturated compound. According to an aspect, the aromatic nucleus of the monomer may be any of benzene, toluene, naphthalene, anthracene, or a higher order aromatic, or any mixture thereof. According to a further aspect, the ethylenic unsaturation may be of di-, tri-, tetra-, and/or higher functionality. According to a preferred aspect, the ethylenically unsaturated aromatic compound is divinylbenzene.

An aspect of the present invention provides a sheet molding compound (SMC) further comprising a low-profiling additive. According to a further aspect, the inventive sheet molding compound includes a low-profiling additive enhancer.

An additional aspect provides a sheet molding compound further comprising one or more additives selected from among mineral fillers, organic fillers, resin tougheners, rubber impact modifiers, organic initiators, stabilizers, inhibitor, thickeners, cobalt promoters, nucleating agents, lubricants, plasticizers, chain extenders, colorants, mold release agents, antistatic agents, pigments, fire retardants, and mixtures thereof.

According to an aspect, there is provided an article of manufacture comprising the inventive low-density SMC. According to a further aspect, the article of manufacture has a Class A Surface Quality. Moreover, according to yet a further aspect, the article of manufacture has a surface smoothness quality less than a 100 Ashland LORIA analyzer index.

According to an additional aspect a method of fabricating an article of manufacture is provided. According to an aspect, the method comprises heating under pressure, in a mold, the inventive low-density SMC.

Still other aspects and advantages of the present invention will become readily apparent by those skilled in the art from the following detailed description, wherein it is shown and described preferred embodiments of the invention, simply by way of illustration of the best mode contemplated of carrying out the invention. As will be realized the invention is capable of other and different embodiments, and its several details are capable of modifications in various obvious respects, without departing from the invention. Accordingly, the description is to be regarded as illustrative in nature and not as restrictive.

Detailed description of invention with reference to figures by numbers.

Reference is made to the figures to illustrate selected embodiments and preferred modes of carrying out the invention. It is to be understood that the invention is not hereby limited to those aspects depicted in the figures.

An aspect of the invention provides SMC-paste formulations comprising a thermosetting resin, an ethylenically unsaturated monomer, a low profiling additive, a nanoclay filler composition, and an alternative reactive monomer having the ability to aid in maintaining SQ as the density of the composite is reduced. According to an aspect, the SMC-paste has a density less than about 1.25 g/cm³. According to an aspect, the nanoclay composition is formulated separately and subsequently mixed with the resins, monomers, and the remaining components of the paste. According to a preferred aspect, the various components of the nanoclay composition and the SMC-paste are blended and the nanoclay forms *in situ.*

The thermosetting sheet molding paste compositions of the present invention comprise: (a) from about 30 to70 parts of thermosetting resin in styrene solution, preferably from about 45 to 65 parts; (b) from about 1 to 10 parts of treated inorganic clay, preferably from about 1 to 6 parts and, more preferred, about 1 to 3 parts; (c) from about 10 to 40 parts of low profile additive, typically as a 50% solution in styrene, and preferably from about 14 to 32 parts; (d) from 0 to 10 parts styrene, preferably from 0 to 5 parts; (e) from 0 to 65 parts of an inorganic filler, preferably from about 30 to 55 parts; and (f), from 1 to 10 parts of ARM, preferably 2 to 6 parts per 100 parts (phr) of 'formulated resin', where by definition, 'formulated resin' is the sum of (a), (c), (d) and (f). Thus, 100 parts of 'formulated resin' becomes the base upon which additional additive and filler additions such as (b) and (e) are made. The SMC sheet comprises from 60 to 85 weight percent SMC paste and from 15 to 40 weight percent, more preferably from about 25 to 35 weight percent, fiber reinforcement.

A first component of the SMC is a thermosetting resin. Although any thermosetting resin can be used in the SMC-paste, the resin preferably is selected from phenolic resins, unsaturated polyester resins, vinyl ester resins, polyurethane-forming resins, and epoxy resins.

Most preferably used as the thermosetting resin are unsaturated polyester resins. Unsaturated polyester resins are the polycondensation reaction product of one or more dihydric alcohols and one or more unsaturated, polycarboxylic acids. The term "unsaturated polycarboxylic acid is meant to include unsaturated polycarboxylic and dicarboxylic acids; unsaturated polycarboxylic and dicarboxylic anhydrides; unsaturated polycarboxylic and dicarboxylic acid halides; and unsaturated polycarboxylic and dicarboxylic esters. Specific examples of unsaturated polycarboxylic acids include maleic anhydride, maleic acid, and fumaric acid. Mixtures of unsaturated polycarboxylic acids and saturated polycarboxylic acids may also be used. However, when such mixtures are used, the amount of unsaturated polycarboxylic acid typically exceeds fifty percent by weight of the mixture.

Examples of suitable unsaturated polyesters include the polycondensation products of (1) propylene glycol and maleic anhydride and/or fumaric acids; (2) 1,3-butanediol and maleic anhydride and/or fumaric acids; (3) combinations of ethylene and propylene glycols (approximately 50 mole percent or less of ethylene glycol) and maleic anhydride and/or fumaric acid; (4) propylene glycol, maleic anhydride and/or fumaric acid and saturated dibasic acids, such as o-phthalic, isophthalic, terephthalic, succinic, adipic, sebacic, methyl-succinic, and the like. In addition to the above-described polyester one may also use dicyclopentadiene modified unsaturated polyester resins as described in U.S. Patent 3,883,612. These examples are intended to be illustrative of suitable polyesters and are not intended to be all-inclusive. The acid number to which the polymerizable unsaturated polyesters are condensed is not particularly critical with respect to the ability of the thermosetting resin to be cured to the desired product. Polyesters, which have been condensed to acid numbers of less than 100 are generally useful, but acid numbers less than 70, are preferred. The molecular weight of the polymerizable unsaturated polyester may vary over a considerable range, generally those polyesters useful in the practice of the present invention having a molecular weight ranging from 300 to 5,000, and more preferably, from about 500-4,000.

A second component of the SMC is an unsaturated monomer that copolymerizes with the unsaturated polyester. The SMC formulation preferably contains an ethylenically unsaturated (vinyl) monomer. Examples of such monomers include acrylate, methacrylates, methyl methacrylate, 2-ethylhexyl acrylate, styrene, divinyl benzene and substituted styrenes, multi-functional acrylates and methacrylates such as ethylene glycol dimethacrylate or trimethylol propanetriacrylate. Styrene is the preferred ethylenically unsaturated monomer. The ethylenically unsaturated monomer is usually present in the range of about 5 to 50 parts per 100 parts by weight, based upon the total weight of unsaturated resin, low profile additive, rubber impact modifier and unsaturated monomer previously defined as the 'formulated resin' above. The unsaturated monomer is present at preferably from about 20 to about 45 parts per 100 parts by weight, and more preferably from about 35 to about 45 parts per 100 parts by weight. The vinyl monomer is incorporated into the composition generally as a reactive diluent for the unsaturated polyester. Styrene is the preferred intercalation monomer for forming the nanoclay composite *in situ,* and is also the preferred monomer for reaction with the UPE resin.

A third component of the inventive SMC is a SQ-maintaining monomer, which may be termed an alternative reactive monomer (ARM). Alternative reactive monomers are those that possess the ability to aid in maintaining SQ as the density of the composite is reduced. A preferred ethylenically unsaturated aromatic compound is divinylbenzene.

According to an aspect, the alternative reactive monomer is an aromatic, multiethylenically-unsaturated monomer. The ARM may beneficially be chosen from among the group of di-, tri-, tetra-, and higher multi functional ethylenically unsaturated aromatic compounds, and mixtures thereof. It is understood that the ethylenically unsaturated aromatic nucleus is selected from the group consisting of benzene, toluene, naphthalene, anthracene, higher order aromatics, and mixtures thereof.

A fourth component of the inventive SMC is a low profiling additive (LPA) added to the formulation as an aid to reduce the shrinkage of the resin matrix for molded articles prepared with the SMC. The LPA's used in the SMC typically are thermoplastic resins. Examples of suitable LPA's include saturated polyesters, polystyrene, urethane linked saturated polyesters, polyvinyl acetate, polyvinyl acetate copolymers, acid functional polyvinyl acetate copolymers, acrylate and methacrylate polymers and copolymers, homopolymers and copolymers include block copolymers having styrene, butadiene and saturated butadienes U.S. Patents 5,116,917 and 5,554,478 assigned to the assignee of the present invention disclose methodology for preparing and using typical saturated polyester thermoplastic low profile additive compositions used with thermosetting resins when preparing SMC.

A fifth component of the inventive SMC is a nanoclay composite filler composition comprising a nanoclay, kaolin clay, and diatomaceous earth. "Nanoclay" is defined as a treated inorganic clay. Any treated inorganic clay can be used to practice this invention. The term treated inorganic clay" is meant to include any layered clay having inorganic cations replaced with organic molecules, such as quaternary ammonium salts. See U.S. Patent 5,853,886 for a description of various methods of preparing treated clay.

Nanoclay composite compositions suitable for the present invention further comprise controlled proportions of kaolin clay. Preferably, the clay has an average particle size of from about 3 to about 5 microns.

Nanoclay composite compositions suitable for the present invention further comprise controlled proportions of diatomacious earth. High surface area, shaped fillers such as diatomacious earth, mica, wollastonite, and kaolin clays maintain high strength at low levels, while helping to promote the efficient profiling of the LPA. SMC formulations using these fillers tend to be highly thixotropic, or shear thinning. They show excellent processing characteristics both on the SMC machine and in the mold.

The components of the nanocomposite composition are given in parts per hundred parts of 'formulated resin', i.e. in phr. The numerical ranges are given below in phr.

The sheet molding compounds of the present invention may optionally comprise a low profile additive enhancer (LPA-enhancing additive) to aid in maintaining SQ and to improve the effectiveness, or "profiling efficiency" of thermoplastic LPA's as the density of the composite is reduced. A methodology for preparing and using such LPA-enhancing additives in SMC is disclosed by Fisher (US5,504,151) and Smith (US6,617,394 B2), assigned to the assignee of the present invention, the entire contents of which is specifically incorporated by reference for all purposes. The more preferred methodology is that disclosed by US5,504,151.

The sheet molding compounds of the present invention may optionally comprise mineral reinforcing fillers such as, but not limited to mica and wollastonite. A suitable composition includes from about 1 to about 40 phr mineral filler, preferably, from about 5 to about 25 phr and more preferably about 10-15 phr. The SMC preferably contains a low-density filler having a density of 0.5 g/cm³ to 2.0 g/cm³, and more preferably from 0.7 g/cm³ to 1.3 g/cm³. Examples of low-density fillers include diatomaceous earth, hollow microspheres, ceramic spheres, and expanded perlite and vermiculate.

The sheet molding compounds of the present invention may optionally comprise organic fillers such as, but not limited to graphite, ground carbon fiber, celluloses, and polymers. A suitable composition includes from about 1 to about 40 phr organic filler, preferably, from about 5 to about 30 phr and more preferably about 10 to 20 phr based on 100 parts of the 'formulated resin' defined above.

The sheet molding compounds of the present invention may optionally comprise toughened, high elongation UPE resins. Such resins are used to modify the thermoset matrix where they help to improve and maintain toughness and mechanicals in low density SMC. It is critically important that those used have a neutral or positive impact on maintaining SQ.

The sheet molding compounds of the present invention may optionally comprise rubber impact modifiers, i.e. rubber tougheners, to help improve toughness, or crack resistance, and maintain mechanical properties, such as tensile and flexural strength and modulus in low density SMC. Rubber impact modifiers are disclosed in U.S. Patent 6,277,905.

The sheet molding compounds of the present invention may optionally comprise organic initiators. The organic initiators are preferably selected from organic peroxides which are highly reactive and decomposable at the desired temperature and having the desired rate of curing. Preferably, the organic peroxide is selected from those, which are decomposable at temperatures from about 50°C to about 120°C. The organic peroxides to be used in the practice of the invention are typically selected from tertiary butyl peroxy 2-ethylhexanoate; 2,5-dimethyl-2,5-di(-benzoylperoxy)cyclohexane; tertiary-amyl 2-ethylhexanoate and tertiary-butyl isopropyl carbonate; tertiary-hexylperoxy 2-ethylhexanoate; 1,1,3,3-tetramethylbutylperoxy 2-ethylhexanoate; tertiary-hexylperoxypivalate; tertiarybutylperoxy pivalate; 2,5-dimethyl-2,5-di(2-ethylhexanoylperoxy) cyclohexane; dilauroyl peroxide; dibenzoyl peroxide; diisobutyryl peroxide; dialkyl peroxydicarbonates such as diisopropyl peroxydicarbonate, di-n-propyl peroxydicarbonate, di-sec-butyl peroxydicarbonate, dicyclohhexyl peroxydicarbonate; VAZ052, which is 2,2'-azobis(2,4-dimethyl-valeronitrile); di-4-tertiarybutylcyclohexyl peroxydicarbonate and di-2 ethylhexyl peroxydicarbonate and t-butylperoxy esters, such as tertiary butylperpivalate and teriarybutylper pivalate and eodecanoate. More preferably, the initiator is a blend of t-butylperoxy-2-ethylhexanoate and t-butylperoxybenzoate. The initiators are used in a proportion that totals from about 0.1 parts to about 6 phr, preferably from about 0.1 to about 4, and more preferably from about 0.1 to about 2 phr, based on 100 parts of the 'formulated resin' as defined above.

The sheet molding compounds of the present invention may optionally comprise stabilizers and/or inhibitors. Stabilizers preferably are those having high polymerization inhibiting affect at or near room temperature. Examples of suitable stabilizers include hydroquinone; toluhydroquinone; di-tertiarybutylhydroxytoluene (BHT); para-tertiarybutylcatechol (TBC); mono-tertiarybutylhydroquinone (MTBHQ); hydroquinone monomethyl ether; butylated hydroxyanisole (BHA); hydroquinone; and parabenzoquinone (PBQ). Stabilizers are used in a total amount ranging from about 0.01 to about 0.4 phr, preferably from about 0.01 to about 0.3 phr and more preferably from about 0.01 to about 0.2 phr of the 'formulated resin'.

The sheet molding compounds of the present invention may optionally comprise thickening agent such as oxides, hydroxides, and alcoholates of magnesium, calcium, aluminum, and the like. The thickening agent can be incorporated in a proportion ranging from about 0.05 to about 5 phr, based on the weight of the 'formulated resin', preferably from about 0.1 to about 4 phr and more preferably, from about 1 to about 3 phr. Additionally or alternatively, the SMC may contain isocyanate compounds and polyols or other isocyanate reactive compounds, which may be used to thicken the SMC.

The sheet molding compounds of the present invention may optionally comprise other additives, e.g. cobalt promoters (Co), nucleating agents, lubricants, plasticizers, chain extenders, colorants, mold release agents, antistatic agents, pigments, fire retardants, and the like. The optional additives and the amounts used depend upon the application and the properties required.

The sheet molding compounds of the present invention further comprises a reinforcing agent, preferably a fibrous reinforcing agent, termed roving. Fibrous reinforcing agents are added to the SMC to impart strength and other desirable physical properties to the molded articles formed from the SMC. Examples of fibrous reinforcements that can be used in the SMC include glass fibers, asbestos, carbon fibers, polyester fibers, and natural organic fibers such as cotton and sisal. Particularly useful fibrous reinforcements include glass fibers which are available in a variety of forms including, for example, mats of chopped or continuous strands of glass, glass fabrics, chopped glass and chopped glass strands and blends thereof. Preferred fibrous reinforcing materials include 0.5, 1, and 2-inch fiberglass fibers. The SMC-paste, prior to the addition of roving and prior too cure under pressure has a density of less than 1.25 g/cm³.

The SMC is useful for preparing molded articles, particularly sheets and panels. The sheets and panels can be used to cover other materials, for example, wood, glass, ceramic, metal, or plastics. They can also be laminated with other plastic films or other protective films. They are particularly useful for preparing parts for recreational vehicles, automobiles, boats, and construction panels. SMC sheet may be shaped by conventional processes such as vacuum or compression (pressure) and is cured by heating, contact with ultraviolet radiation, and/or catalyst, or other appropriate means. Using the preferred industry-standard conditions of heat and pressure, the inventive SMC yields a Class A surface.

The invention also has inherent advantages over standard density SMC during the typical industrial molding process. The increase in resin content and reduced filler level allows the sheet to flow smoothly and fill the mold at conditions of heat and pressure significantly lower than industry-standard. In addition to reducing the cost of molding parts, the reduction of mold pressure and temperature yields substantial improvement in the overall SQ of the part, especially the short-term DOI and OP values as shown by the data in TABLES 2 and 3.

Surface quality (SQ), as measured by the Laser Optical Reflected Image Analyzer, or LORIA, is determined by three measurements - Ashland Index (AI), Distinctness of Image (DOI), and Orange Peel (OP). SMC with Class A SQ is typically defined as having an AI < 80, a DOI ≥ 70 (scale 0-100), and an OP ≥ 7.0 (scale 0-10). A preferred methodology for the determination of surface quality is disclosed by Hupp (US4,853,777), the entire content of which is specifically incorporated by reference for all purposes.

In addition to SQ, the mechanical properties of the inventive SMC were determined. The tensile strength is measured by pulling a sample in an Instron instrument as is conventional in the art. The tensile modulus is determined as the slope of the stress-strain curve generated by measurement of the tensile strength. Flexural strength is determined conventionally using an Instron instrument. The flexural modulus is the slope of the stress-strain curve. Toughness is conventionally the area under the stress-strain curve.

A conventional SMC 'formulated resin' has the following approximate composition: 65.0g of a high reactivity unsaturated polyester (UPE); 7g of a styrene monomer; and 28g of low profile additives (LPA) as a 50% solution in styrene. For each 100g of 'formulated resin', about 190g of calcium carbonate filler; 9g of magnesium oxide containing thickener; 4.5g mold release; 1.5g tertiary butyl perbenzoate catalyst; and 0.05g of a co-activator (cobalt, 12% in solution) are charged to generate the 'SMC paste.' Conventional SMC formulations typically have densities of > 1.9g/cc for molded parts. The present invention provides molded parts having a density of from 1.45 to 1.6g/cc while maintaining nearly the same mechanicals, Class A SQ, and toughness. As the density is reduced, however, maintaining these properties becomes increasingly difficult. The present invention provides a tough, low-density SMC having industry-required mechanicals and Class A SQ by replacing high-density calcium carbonate with an inventive filler composition, which has a highly structured surface that enhances LPA efficiency and helps maintain mechanical properties.

The filler package for low density SMC might include 1-6g of nanoclay, 0-20g of diatomaceous earth, 0 to 25g mica, 0 to 25g wollastonite, 0 to 25g of ground carbon fiber and/or 0 to 60g kaolin clay, CaCO₃, graphite or aluminum trihydrate per 100 grams of 'formulated resin'. Combinations of these fillers totaling 35 to 65g are typically required to maintain the desired properties as the density is lowered. However, the high surface area and irregular shape of most of these fillers give them a very high resin demand. Even with the use of commercial viscosity reducing additives, the optimal level for an individual filler type will be limited by its impact on the resin paste viscosity. SMC resin paste viscosity is typically kept between 15,000 and 35,000 cps to control paste 'sag' and ensure proper 'wet-out' of the glass reinforcement in the SMC sheet.

The invention is illustrated with one example. SMC paste formulations were evaluated for shrinkage and molded into cured reinforced panels. To evaluate shrinkage, SMC paste without fiber glass was molded and cured in a Carver Laboratory Press at 300°F and evaluated for shrinkage. For further testing, SMC paste was combined, on a SMC machine, with fiber glass roving, chopped to 1-inch lengths, allowed to thicken for 2 to 3 days, and then molded at 300° F to form 0.1 inch thick plates. The plates were tested for density, surface appearance, and mechanical strength. The surface appearance was analyzed using a LORIA surface analyzer to measure the Ashland Index for 'long term waviness' and the Distinctness of Image(DOI) and Orange Peel(OP) for 'short term' surface distortion.

We have observed a significant and unexpected reduction of paste viscosities in some SMC formulations when substituting a limited amount of divinylbenzene (DVB) for styrene. When DVB was used in the low density formulation, a viscosity reduction was observed. To our surprise, we also observed a significant improvement in the short term SQ for the molded panels. Additional evaluations showed that neither mechanicals nor toughness were significantly decreased by the increase in cross-linking from the DVB.

The invention is illustrated with one example. The SMC paste formulations were evaluated for shrinkage and molded into cured reinforced panels using the following procedures: (1) SMC paste without fiber glass was molded and cured in the Carver Laboratory Press at 300°F and evaluated for shrinkage; and (2) SMC paste was combined with chopped 1" roving fiber glass on a SMC machine, allowed to thicken for 2-3 days, and then molded at 300 °F to form 0.1 inch thick plates. The plates were tested for density, surface appearance, and mechanical strength. The surface appearance was analyzed using a LORIA surface analyzer to measure the Ashland Index for 'long term waviness' and the Distinctness of Image (DOI) and Orange Peel (OP) for 'short term' surface distortion.

Table I shows the data for the example. It demonstrates that using only styrene at 42 phr (TLM-1) produces SMC panels with good mechanical properties, however, the surface quality is below the Class A standard for DOI and OP. TLM-2 clearly shows that reducing the styrene level to 36 phr and adding 6 phr of DVB improves the overall surface quality, and, in particular, the DOI and OP values, to meet class A standards. It is also important to note that the addition of DVB did not result in a reduction in mechanicals or 'paint-pop' resistance.

Experiments TLM-4 thru 6 highlight the surprising nature of the SQ-maintaining properties of DVB. Replacing styrene with other common low molecular weight crosslinkers, such as trimethylolpropane triacrylate (TMPTA), trimethylolpropane trimethacrylate (TMPTMA), or ethylene glycol dimethacrylate (EGDMA), fails to yield a SQ improvement similar to that given by DVB. Rather the presence of any of TMPTA, TMPTMA, or EGDMA, at a level equivalent to DVB in terms of number of double bonds, results in a reduction of surface quality well below the Class A standard, and even below that of only styrene, i.e. TLM-1. Mechanical properties and 'paint pop' analyses were not run on TLM-4 thru TLM-6.

Further aspects of the present invention relate to methods and processes for fabricating molded composite vehicle and construction parts having a density less than 1.6 grams per cm³. In an aspect the methods comprises admixing unsaturated polyester thermosetting resin, an olefinically unsaturated monomer capable of copolymerizing with the unsaturated polyester resin, a thermoplastic low profile additive, free radical initiator, alkaline earth oxide or hydroxide thickening agent, and a nanoclay composite filler composition. According to an aspect, the nanoclay composite is provided as a pre-formed composition. According to another aspect, the nanoclay composite is formed *in situ* from precursor materials.

According to an aspect of the method, the various starting materials are mixed to form a paste which is dispensed on a carrier film above and below a bed of chopped roving, forming a molding sheet. According to an aspect, the molding sheet is enveloped in a carrier film and consolidated. According to further aspects of the method, the sheet is matured until a molding viscosity of 3 million to 70 million centipoise is attained and the sheet is non-tacky. Following consolidation, the sheet is released from the carrier film.

According to various aspects of the inventive method, the consolidated sheet is molded into composite parts to be assembled into vehicles. The sheets may be molded into composite construction materials. According to an aspect of the method, the sheets are placed in a heated mold and compressed under pressure whereby a uniform flow of resin, filler and glass occurs outward to the edges of said part. Table 3 demonstrates the performance of the inventive SMC at various molding temperatures. According to an aspect, the sheet is heated in the mold to a temperature from 250° F to 305° F. In a preferred aspect the sheet is heated to a temperature of from 270° F to 290° F. In a most preferred aspect the sheet is heated to a temperature of from 275° F to 285° F. Table 4 demonstrates the performance of the inventive SMC at various molding pressures. In an aspect, the sheets are molded at a pressure of from 200 psi to 1400 psi; preferably from 400 psi to 800 psi.

According to preferred aspects, the paste is composed of auxiliary components that may include mineral fillers, organic fillers, auxiliary monomers, rubber impact modifiers, resin tougheners, organic initiators, stabilizers, inhibitor, thickeners, cobalt promoters, nucleating agents, lubricants, plasticizers, chain extenders, colorants, mold release agents, antistatic agents, pigments, fire retardants, and mixtures thereof.

The foregoing description of the invention illustrates and describes the present invention. Additionally, the disclosure shows and describes only the preferred embodiments of the invention but, as mentioned above, it is to be understood that the invention is capable of use in various other combinations, modifications, and environments and is capable of changes or modifications within the scope of the inventive concept as expressed herein, commensurate with the above teachings and/or the skill or knowledge of the relevant art. The embodiments described hereinabove are further intended to explain best modes known of practicing the invention and to enable others skilled in the art to utilize the invention in such, or other, embodiments and with the various modifications required by the particular applications or uses of the invention. Accordingly, the description is not intended to limit the invention to the form disclosed herein. Also, it is intended that the appended claims be construed to include alternative embodiments.

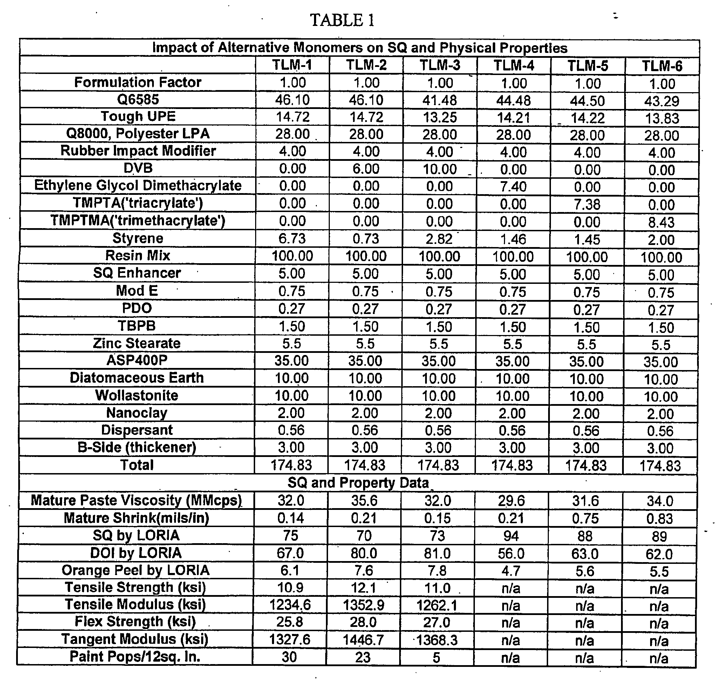

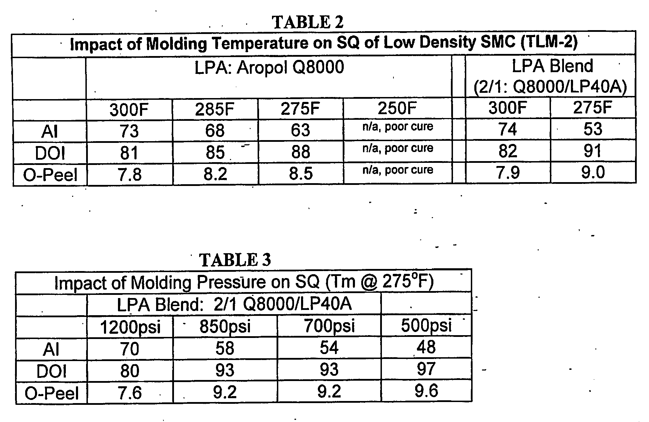

## Claims

1. A sheet molding compound paste formulation comprising:
- a thermosetting resin;
- an ethylenically unsaturated monomer;
- an alternative reactive monomer, which is an aromatic, multiethylenically-unsaturated monomer;
- a low profiling additive; and
- a nanoclay filler composition, wherein said SMC paste has a density less than 1.25 g/cm³.

2. The paste formulation according to claim 1, wherein said alternative reactive monomer is selected from the group consisting of di-, tri-, tetra-, and higher multi functional ethylenically unsaturated aromatic compounds, and mixtures thereof.

3. The paste formulation according to claim 2, wherein said ethylenically unsaturated aromatic compound is selected from the group consisting of benzene, toluene, naphthalene, anthracene, higher order aromatics, and mixtures thereof.

4. The paste formulation, according to claim 2, wherein a preferred ethylenically unsaturated aromatic compound is divinylbenzene.

5. The paste formulation, according to claim 1, further comprising a low-profiling additive enhancer.

6. The paste formulation according to claim 1, further comprising at least one additive selected from the group consisting of mineral fillers, organic fillers, resin tougheners, rubber impact modifiers, organic initiators, stabilizers, inhibitor, thickeners, cobalt promoters, nucleating agents, lubricants, plasticizers, chain extenders, colorants, mold release agents, antistatic agents, pigments, fire retardants, and mixtures thereof.

7. A sheet molding compound (SMC) comprising:
- the paste formulation according to claim 1; and
- a roving reinforcing material.

8. An article of manufacture comprising the low-density SMC of claim 7.

9. A process for making molded composite vehicle and construction parts having a density less than 1.6 grams per cm³, comprising:
admixing
- unsaturated polyester thermosetting resin;
- an olefinically unsaturated monomer capable of copolymerizing with said unsaturated polyester resin;
- an alternative reactive monomer, which is an aromatic, multiethylenically-unsaturated monomer;
- a thermoplastic low profile additive;
- free radical initiator;
- alkaline earth oxide or hydroxide thickening agent; and
- a nanoclay composite filler composition;
forming a paste;
dispensing said paste on a carrier film above and below a bed of roving, forming a molding sheet;
enveloping said sheet in the carrier film;
consolidating said sheet;
maturing said sheet until a matured molding viscosity of 3 million to 70 million centipoise is attained and said sheet is non-tacky;
releasing said sheet from said carrier film;
compression molding said sheet into a part in a heated mold under pressure whereby a uniform flow of resin, filler and glass occurs outward to the edges of said part; and
removing said molded part.

10. The process for making molded composite vehicle and construction parts according to claim 9, wherein said alternative reactive monomer is selected from the group consisting of di-, tri-, tetra-, and higher multi functional ethylenically unsaturated aromatic compounds, and mixtures thereof.

11. The process according to claim 9, wherein said ethylenically unsaturated aromatic compound is selected from the group consisting of benzene, toluene, naphthalene, anthracene, higher order aromatics, and mixtures thereof.

12. The process according to claim 9, wherein a preferred ethylenically unsaturated aromatic compound is divinylbenzene.

13. The process according to claim 9, wherein said molding pressure for the part is from 13.8 bar (200 psi) to 96.5 bar (1400 psi); preferably from 27.6 bar (400 psi) to 55.2 bar (800 psi).

14. The process according to claim 9, wherein said molding temperature for the part is from 121.1 °C (250 °F) to 151.7 °C (305 °F); preferably from 132.2 °C (270 °F) to 143.3 °C (290 °F); and most preferably from 135 °C (275 °F) to 140.6 °C (285 °F).

15. The method of fabricating a low-density SMC according to claim 9, further comprising providing auxiliary components selected from the group consisting of LPA-enhancers, mineral fillers, organic fillers, auxiliary monomers, rubber impact modifiers, resin tougheners, organic initiators, stabilizers, inhibitor, thickeners, cobalt promoters, nucleating agents, lubricants, plasticizers, chain extenders, colorants, mold release agents, antistatic agents, pigments, fire retardants, and mixtures thereof.

16. A method of fabricating an article of manufacture comprising heating under pressure the low-density SMC of claim 7.

## Patentansprüche

1. Eine Sheet Molding Compound (SMC)-Pastenformulierung umfassend:
- ein wärmehärtendes Harz;
- ein ethylenisch ungesättigtes Monomer;
- ein alternatives reaktives Monomer, das ein aromatisches, multiethylenisch ungesättigtes Monomer ist;
- ein Niedrigprofilzusatzstoff; und
- eine Nanotonerdefüllstoffzusammensetzung,
wobei die SMC-Paste eine Dichte kleiner als 1,25 g/cm³ aufweist.

2. Die Pastenformulierung gemäß Anspruch 1, wobei das alternative reaktive Monomer ausgewählt wird aus der Gruppe bestehend aus di-, tri-, tetra-, und höheren multifunktionellen ethylenisch ungesättigten aromatischen Verbindungen und deren Mischungen.

3. Die Pastenformulierung gemäß Anspruch 2, wobei die ethylenisch ungesättigte aromatische Verbindung ausgewählt wird aus der Gruppe bestehend aus Benzol, Toluol, Naphthalen, Anthracen, Aromaten höherer Ordnung und deren Mischungen.

4. Die Pastenformulierung gemäß Anspruch 2, wobei eine bevorzugte ethylenisch ungesättigte aromatische Verbindung Divinylbenzol ist.

5. Die Pastenformulierung gemäß Anspruch 1, die zusätzlich einen Niedrigprofilzusatzstoffverstärker umfasst.

6. Die Pastenformulierung gemäß Anspruch 1, die zusätzlich wenigstens einen Zusatzstoff ausgewählt aus der Gruppe bestehend aus mineralischen Füllstoffen, organischen Füllstoffen, Harzzähigkeitsvermittlern, Gummischlagzähmodifizierern, organischen Initiatoren, Stabilisatoren, Inhibitoren, Verdickern, Kobaltpromotoren, Nukleierungsmitteln, Schmierstoffen, Weichmachern, Kettenverlängerungsmitteln, Farbstoffen, Formtrennmitteln, antistatischen Mitteln, Pigmenten, Flammschutzmitteln und deren Mischungen umfasst.

7. Ein Sheet Molding Compound (SMC) umfassend:
- die Pastenformulierung gemäß Anspruch 1; und
- ein Roving-Verstärkungsmaterial.

8. Ein Herstellungsgegenstand umfassend das SMC mit geringer Dichte gemäß Anspruch 7.

9. Ein Verfahren zur Herstellung von Verbundkarosserien und Verbundkonstruktionsteilen, die eine Dichte kleiner als 1,6 Gramm pro cm³ aufweisen, umfassend:
Mischen von
- ungesättigtem wärmehärtendem Polyesterharz;
- einem olefinisch ungesättigten Monomer, das in der Lage dazu ist, mit dem ungesättigten Polyesterharz zu copolymerisieren;
- einem alternativen reaktiven Monomer, das ein aromatisches, multiethylenisch ungesättigtes Monomer ist;
- einem thermoplastischen Niedrigprofilzusatzstoff;
- freiem Radikalinitiator;
- Erdalkalimetalloxid- oder Erdalkalimetallhydroxid-Verdickungsmittel; und
- einer Nanotonerdefüllstoffzusammensetzung;
Bilden einer Paste;
Verteilen der Paste auf einer Trägerfolie oberhalb und unterhalb einer Unterlage aus Roving, wodurch eine Formplatte gebildet wird;
Einwickeln der Platte in die Trägerfolie;
Festigen der Platte;
Ablagern der Platte, bis eine gelagerte Formviskosität von 3 Millionen bis 70 Millionen Centipoise erreicht ist und diese Platte nicht-haftend ist;
Befreien der Platte aus der Trägerfolie;
Formpressen der Platte zu einem Teil in einer beheizten Form unter Druck, wobei ein gleichförmiger Fluss des Harzes, des Füllstoffes und des Glases nach außen führend zu den Kanten des Teils erfolgt; und
Entfernen des geformten Teils.

10. Das Verfahren zur Herstellung geformter Verbundkarosserien und Verbundkonstruktionsteile gemäß Anspruch 9, wobei das alternative reaktive Monomer ausgewählt wird aus der Gruppe bestehend aus di-, tri-, tetra-, und höheren multifunktionellen ethylenisch ungesättigten aromatischen Verbindungen und deren Mischungen.

11. Das Verfahren gemäß Anspruch 9, wobei die ethylenisch ungesättigte aromatische Verbindung ausgewählt wird aus der Gruppe bestehend aus Benzol, Toluol, Naphthalen, Anthracen, Aromaten höherer Ordnung und deren Mischungen.

12. Das Verfahren gemäß Anspruch 9, wobei eine bevorzugte ethylenisch ungesättigte aromatische Verbindung Divinylbenzol ist.

13. Das Verfahren gemäß Anspruch 9, wobei der Formungsdruck für das Teil von 13,8 bar (200 psi) bis 96,5 bar (1400 psi); bevorzugt von 27,6 bar (400 psi) bis 55,2 bar (800 psi), ist.

14. Das Verfahren gemäß Anspruch 9, wobei die Formungstemperatur für das Teil von 121,1°C (250°F) bis 151,7°C (305°F); bevorzugt von 132,2°C (270°F) bis 143,3°C (290°F); und besonders bevorzugt von 135°C (275°F) bis 140,6°C (285°F), ist.

15. Das Verfahren zur Herstellung eines SMC mit geringer Dichte gemäß Anspruch 9, das zusätzlich das Zurverfügungstellen von Hilfsbestandteilen ausgewählt aus der Gruppe bestehend aus Niedrigprofilzusatzstoffverstärkern, mineralischen Füllstoffen, organischen Füllstoffen, Hilfsmonomeren, Gummischlagzähmodifizierern, Harzzähigkeitsvermittlern, organischen Initiatoren, Stabilisatoren, Inhibitoren, Verdickern, Kobaltpromotoren, Nukleierungsmitteln, Schmiermitteln, Weichmachern, Kettenverlängerern, Farbstoffen, Formtrennmitteln, antistatischen Mitteln, Pigmenten, Flammschutzmitteln und deren Mischungen umfasst.

16. Ein Verfahren zur Herstellung eines Herstellungsgegenstandes umfassend das Heizen des Sheet Molding Compounds mit geringer Dichte gemäß Anspruch 7 unter Druck.

## Revendications

1. Formulation de composé pour le moulage de feuilles sous forme de pâte, comprenant :
- une résine thermodurcissable ;
- un monomère à insaturation éthylénique ;
- un autre monomère réactif, lequel est un monomère aromatique, à insaturation multiéthylénique ;
- un additif limitant le retrait ; et
- une composition de charge à base de nanoargile, ledit composé pour le moulage de feuilles (CMF) sous forme de pâte ayant une densité inférieure à 1,25 g/cm³.

2. Formulation de pâte selon la revendication 1, dans laquelle ledit autre monomère réactif est sélectionné dans le groupe constitué de composés aromatiques à insaturation éthylénique difonctionnels, trifonctionnels, tétrafonctionnels, et multifonctionnels ayant un niveau de fonctionnalité supérieur, et de mélanges de ceux-ci.

3. Formulation de pâte selon la revendication 2, dans laquelle ledit composé aromatique à insaturation éthylénique est sélectionné dans le groupe constitué du benzène, du toluène, du naphtalène, de l'anthracène, de composés aromatiques d'ordre supérieur, et de mélanges de ceux-ci.

4. Formulation de pâte selon la revendication 2, dans laquelle un composé aromatique à insaturation éthylénique préféré est le divinylbenzène.

5. Formulation de pâte selon la revendication 1, comprenant en outre un renforceur d'additif limiteur de retrait.

6. Formulation de pâte selon la revendication 1, comprenant en outre au moins un additif sélectionné dans le groupe constitué de charges minérales, de charges organiques, d'agents de renforcement de résines, de modificateurs de résistance aux chocs à base de caoutchouc, d'initiateurs organiques, de stabilisants, d'inhibiteurs, d'épaississants, de promoteurs à base de cobalt, d'agents de nucléation, de lubrifiants, de plastifiants, d'agents d'extension de chaîne, de colorants, d'agents de démoulage, d'agents antistatiques, de pigments, d'agents ignifuges, et de mélanges de ceux-ci.

7. Composé pour le moulage de feuilles (CMF) comprenant :
- la formulation de pâte selon la revendication 1 ; et
- un matériau de renforcement sous forme de stratifils.

8. Produit manufacturé comprenant le CMF à basse densité selon la revendication 7.

9. Procédé de fabrication de pièces en composite moulé pour des véhicules et pour l'industrie de la construction ayant une densité inférieure à 1,6 gramme par cm³, comprenant :
le mélange par addition
- d'une résine thermodurcissable de polyester insaturé ;
- d'un monomère à insaturation oléfinique capable d'être copolymérisé avec ladite résine de polyester insaturée ;
- d'un autre monomère réactif, lequel est un monomère aromatique, à insaturation multiéthylénique ;
- d'un additif thermoplastique limiteur de retrait ;
- d'un initiateur de radicaux libres ;
- d'un oxyde alcalino-terreux ou d'un agent épaississant hydroxyde ; et
- d'une composition de charge composite à base de nanoargile ;
la formation d'une pâte ;
le dépôt de ladite pâte sur un film de support au-dessus et en dessous d'un lit de stratifils, en formant une feuille de moulage ;
l'enveloppement de ladite feuille dans le film de support ;
l'amalgamation de ladite feuille ;
la maturation de ladite feuille jusqu'à ce qu'une viscosité de moulage après maturation de 3 millions à 70 millions de centipoises soit atteinte et que ladite feuille soit non collante ;
la séparation de ladite feuille dudit film de support ;
le moulage par compression de ladite feuille pour produire une pièce dans un moule chauffé sous pression, lors duquel un écoulement uniforme de résine, de charge et de verre a lieu vers l'extérieur jusqu'aux bords de ladite pièce ; et le démoulage de ladite pièce moulée.

10. Procédé de fabrication de pièces en composite moulé pour des véhicules et pour l'industrie de la construction selon la revendication 9, dans lequel ledit autre monomère réactif est sélectionné dans le groupe constitué de composés aromatiques à insaturation éthylénique difonctionnels, trifonctionnels, tétrafonctionnels, et multifonctionnels ayant un niveau de fonctionnalité supérieur, et de mélanges de ceux-ci.

11. Procédé selon la revendication 9, dans lequel ledit composé aromatique à insaturation éthylénique est sélectionné dans le groupe constitué du benzène, du toluène, du naphtalène, de l'anthracène, de composés aromatiques d'ordre supérieur, et de mélanges de ceux-ci.

12. Procédé selon la revendication 9, dans lequel un composé aromatique à insaturation éthylénique préféré est le divinylbenzène.

13. Procédé selon la revendication 9, dans lequel ladite pression de moulage pour la pièce est de 13,8 bars, (200 livres par pouce carré) à 96,5 bars (1 400 livres par pouce carré) ; préférablement de 27,6 bars (400 livres par pouce carré) à 55,2 bars (800 livres par pouce carré).

14. Procédé selon la revendication 9, dans lequel ladite température de moulage pour la pièce est de 121,1 °C (250 °F) à 151,7 °C (305 °F) ; préférablement de 132,2 °C (270 °F) à 143,3 °C (290 °F) ; et idéalement de 135 °C (275 °F) à 140,6 °C (285 °F).

15. Procédé de fabrication d'un CMF à basse densité selon la revendication 9, comprenant en outre la fourniture de constituants auxiliaires sélectionnés dans le groupe constitué de renforceurs d'additifs limiteurs de retrait, de charges minérales, de charges organiques, de monomères auxiliaires, de modificateurs de résistance aux chocs à base de caoutchouc, d'agents de renforcement de résines, d'initiateurs organiques, de stabilisants, d'inhibiteurs, d'épaississants, de promoteurs à base de cobalt, d'agents de nucléation, de lubrifiants, de plastifiants, d'agents d'extension de chaîne, de colorants, d'agents de démoulage, d'agents antistatiques, de pigments, d'agents ignifuges, et de mélanges de ceux-ci.

16. Procédé de fabrication d'un produit manufacturé comprenant un chauffage sous pression du CMF à basse densité selon la revendication 7.
